# EUROPÄISCHE PATENTSCHRIFT

(11) **EP 0 749 613 B1**
(45) Veröffentlichungstag und Bekanntmachung des Hinweises auf die Patenterteilung: **23.09.1998**
(21) Anmeldenummer: 95912226.8
(22) Anmeldetag: 08.03.1995
(51) Int. Cl.: G06K 9/68

(54) **WISSENSBASIERTE UNSCHÄRFE AUSWAHL FÜR ERKENNUNGSSYSTEM MIT MEHREREN ERKENNUNGSEINHEITEN**
KNOWLEDGE-BASED FUZZY SELECTION FOR RECOGNITION SYSTEM HAVING SEVERAL RECOGNITION UNITS
SELECTION FLOUE FONDEE SUR LES CONNAISSANCES POUR SYSTEME D'IDENTIFICATION COMPORTANT PLUSIEURS UNITES D'IDENTIFICATION

(30) Priorität: 10.03.1994 DE 4407998
(43) Veröffentlichungstag der Anmeldung: 27.12.1996
(73) Patentinhaber: International Business Machines Corporation, Armonk, N.Y. 10504 (US)
(72) Erfinder: RUPPERT, Werner, D-71101 Schönaich (DE); MAIER, Udo, D-72218 Wildberg (DE)
(74) Vertreter: Teufel, Fritz, Dipl.-Phys.
(86) Internationale Anmeldenummer: EP9500857
(87) Internationale Veröffentlichungsnummer: WO9524693

(56) Entgegenhaltungen:
- PROC. TENCON '93 IEEE REGION 10 CONF. ON COMPUTER, COMMUNICATION, CONTROL AND POWER ENGINEERING, Bd. 2/5, 19.Oktober 1993 BEIJING, CHINA, Seiten 811-814, XP 000463124 C. HONG ET AL 'Hierarchical control structure for multisensor object recognition system'
- 20TH AIPR WORKSHOP. COMPUTER VISION APPLICATIONS: MEETING THE CHALLENGES, MCLEAN, VA, USA, 17-18 OCT. 1991, Bd. 1623, ISSN 0277-786X, PROCEEDINGS OF THE SPIE - THE INTERNATIONAL SOCIETY FOR OPTICAL ENGINEERING, 1992, USA, KELLER J M ET AL 'Information fusion via fuzzy logic in automatic target recognition'

## Beschreibung

Die Erfindung betrifft ein Verfahren und eine Vorrichtung zur Erkennung von Schriftzeichen auf einem Beleg mit mindestens zwei Schrifterkennungseinheiten.

Die Erkennung von Charaktermustern oder Schriftzeichen ist in der modernen Geschäftswelt eine immer wichtigere Aufgabe. Insbesondere im Bankenbereich und im sonstigen Finanzwesen werden Datenverarbeitungsanlagen mit Schrifterkennungseinheiten eingesetzt, um Überweisungsaufträge, Scheckvordrucke und sonstige Belege ohne Hilfe einer manuellen Eingabe zu lesen.

Es sind vor allem zwei Zeichen- oder Schrifterkennungsverfahren in der Bundesrepublik bekannt, die auf dem Markt sind. Das Verfahren von der Firma Computer Gesellschaft Konstanz mbH (CGK) ist unter der Typenbezeichnung "CSL 2610" vermarktet. Die Firma AEG Electrocqm GmbH Erkennungssysteme hat die "Polyform" Zeichenerfassungssoftware entwickelt. Diese Software findet in Beleglesegeräten der Firma AEG und in Geräten von anderen Firmen Anwendung.

Ein unterschiedlicher Schrifterkennungsalgorithmus liegt den zwei Verfahren zugrunde und sie können deswegen als "orthogonal" zueinander bezeichnet werden. Dieser Unterschied im eingesetzten Algorithmus führt zu dem Ergebnis, daß die zwei Verfahren für den gleichen Text verschiedene Resultate liefern. Die Abweichung der Resultate ist besonders bei handgeschriebenem Text bemerkbar, da die Zeichen in solchem Text oft sehr schnell und nicht deutlich geschrieben werden.

Um die Zuverlässigkeit der Schrifterkennung zu verbessern, haben Versuche mit einem sogenannten "Multi-Voting"-Verfahren stattgefunden, wobei die Ergebnisse des Lesens des gleichen Zeichens aus mehreren Schrifterkennungseinheiten an eine Schlichtungseinheit geliefert werden. Die Schlichtungseinheit, wie sie heute Verwendung findet, vergleicht die Ergebnisse und wählt häufig das Gesamtergebnis des Schrifterkennungsverfahrens gemäß den folgenden Regeln aus:
i) Kommen alle Schrifterkennungseinheiten zum gleichen Ergebnis, dann ist das Ergebnis trivial, d.h. das Gesamtergebnis wird aus einer beliebigen Schrifterkennungseinheit ausgewählt.
ii) Kann keine der Schrifterkennungseinheiten ein zuverlässiges Ergebnis liefern, so ist das Gesamtergebnis "reject" (nicht erkennbar).
iii) Sind die Ergebnisse aller Schrifterkennungseinheiten gleich, davon mindestens eines mit einem Zuverlässigkeitswert größer als ein bestimmter Schwellwert (z.B. 50%), so wird der zuverlässigste Wert als Gesamtergebnis ausgewählt.
iv) Sind die Ergebnisse aller Schrifterkennungseinheiten ungleich, so ist das Gesamtergebnis "reject" (nicht erkennbar).

Das "Multi-Voting"-Verfahren verbessert nur geringfügig die Zuverlässigkeit des Erkennungsverfahrens gegenüber den herkömmlichen Verfahren. Es erfordert aber den Einsatz von mindestens zwei Schrifterkennungseinheiten, die jeweils einen anderen Erkennungsalgorithmus verwenden. Dabei sind wesentlich mehr Kosten an Lizenzgebühren fällig und die Kosten/Nutzen-Relation ist zweifelhaft.

Der Erfindung liegt die Aufgabe zugrunde, ein verbessertes Schrifterkennungsverfahren zu entwickeln unter Verwendung mehrerer Schrifterkennungseinheiten.

Diese Aufgabe wird erfindungsgemäß gelost durch ein Verfahren nach Anspruch 1 und eine Vorrichtung nach Anspruch 6. Mit Hilfe der berechneten Glaubwürdigkeiten können die Prinzipien von "Fuzzy-Logik" oder die Lehre der unscharfen Mengen zur Auswertung der Ergebnisse der Mehrzahl der Schrifterkennungseinheiten verwendet werden. Simulationen haben nachgewiesen, daß die Zuverlässigkeit des Schrifterkennungsverfahrens nach der Lehre der Erfindung um 57% gegenüber dem bekannten konventionellen "Multi-Voting"-Verfahren verbessert ist.

Bei einer Ausgestaltung der Erfindung wird von jeder Schrifterkennungseinheit lediglich das Ergebnis mit dem höchsten Zuverlässigkeitswert verwendet. Es wäre aber möglich, weitere Erkennungsalternativen mit den jeweils niedrigeren Zuverlässigkeitswerten zu benutzen. Weitere Ausgestaltungen der Erfindung sind in den abhängigen Ansprüchen enthalten.

Es zeigen:
- Fig. 1: ein Diagramm der erfindungsgemäßen Vorrichtung
- Fig. 2: ein Diagramm des Speichers der erfindungsgemäßen Vorrichtung
- Fig. 3: ein Flußdiagramm des erfindungsgemäßen Verfahrens
- Fig. 4: ein Diagramm zur Berechnung des Zugehörigkeitswertes aus den von den Schrifterkennungseinheiten gelieferten Zuverlässigkeitswerten.
- Fig. 5: ein Beispiel eines zu erkennenden Charaktermusters
- Fig. 6A: eine graphische Darstellung der Berechnung des Erfülltheitsgrades
- Fig. 6B: ein Beispiel des berechneten Erfülltheitsgrades.

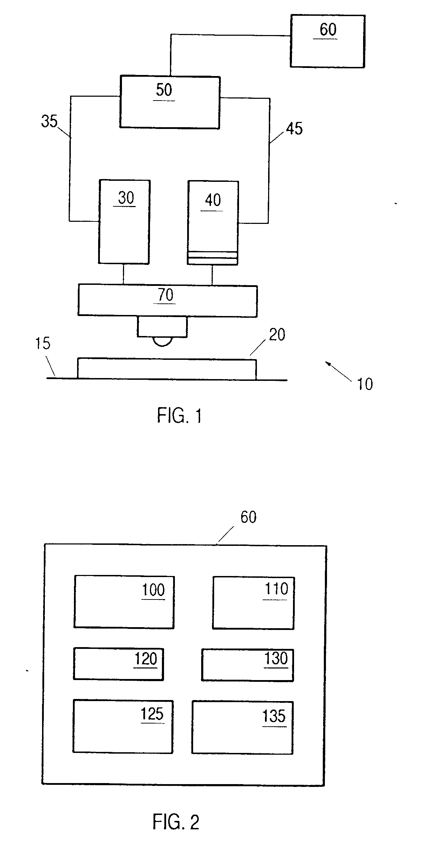

Fig. 1 zeigt die erfindungsgemäße Vorrichtung 10. Auf einer Scanvorrichtung 15 liegt ein Beleg 20. Der Beleg 20 ist ein Überweisungsformular, ein Scheckvordruck, eine Lastschrift oder ein anderes Schriftstück. Der Beleg 20 weist Schriftzeichen oder Charaktermuster auf, die mittels der Vorrichtung 10 zu erkennen sind.

Die Vorrichtung 10 enthält eine optische Abtasteinheit 70, die den Beleg 20 in ein elektronisches Bild verwandelt, das den Schrifterkennungseinheiten 30 und 40 angeboten wird.

Die Vorrichtung 10 enthält auch eine erste Schrifterkennungseinheit 30 und eine zweite Schrifterkennungseinheit 40. Die erste und zweite Schrifterkennungseinheit 30, 40 sind vorzugsweise zwei unterschiedliche Schrifterkennungseinheiten, denen jeweils ein unterschiedlicher Schrifterkennungsalgorithmus zugrunde liegt. Es können aber beliebig viele sein. Die erste Schrifterkennungseinheit 30 kann z.B. den von der Firma AEG entwickelten Algorithmus verwenden und die zweite Schrifterkennungseinheit 40 kann den von der Computer Gesellschaft Konstanz entwickelten Algorithmus verwenden.

Die Schrifterkennungseinheiten 30, 40 liefern ihre Ergebnisse an einen Prozessor 50 mittels Signalleitungen 35, 45. Der Prozessor 50 verarbeitet die Ergebnisse aus den zwei Schrifterkennungseinheiten 30, 40, um den auf dem Beleg 20 geschriebenen Text zu entziffern, und speichert den entzifferten Text in einen Teil des Speichers 60 ab.

Der Speicher 60 ist in verschiedene Teile aufgeteilt, die in Fig. 2 dargestellt werden. In einem Charakatermusterspeicherteil 100 werden sämtliche Ergebnisse der Schrifterkennungseinheiten 30, 40 zunächst abgespeichert. In einer Regeldatenbank 110 werden Regeln abgespeichert, die für das erfindungsgemäße Verfahren verwendet werden. Ein Mustervektorspeicherteil 120 enthält Angaben über die Glaubwürdigkeit der erkannten Zeichen. In einem Regelergebnisspeicherteil 125 werden die Ergebnisse der Auswertung des Mustervektors mit Hilfe der Regeln in der Regeldatenbank 110 abgespeichert. Eine Erfülltheitsgradtabelle 135 speichert die Erfülltheitsgrade der Regeln ab. Im Endergebnisspeicherteil 130 wird das Ergebnis des Schrifterkennungsverfahrens in kodierter Form, z.B. in der Form von ASCII-Zeichen oder anderen maschinenlesbaren Zeichen abgelegt.

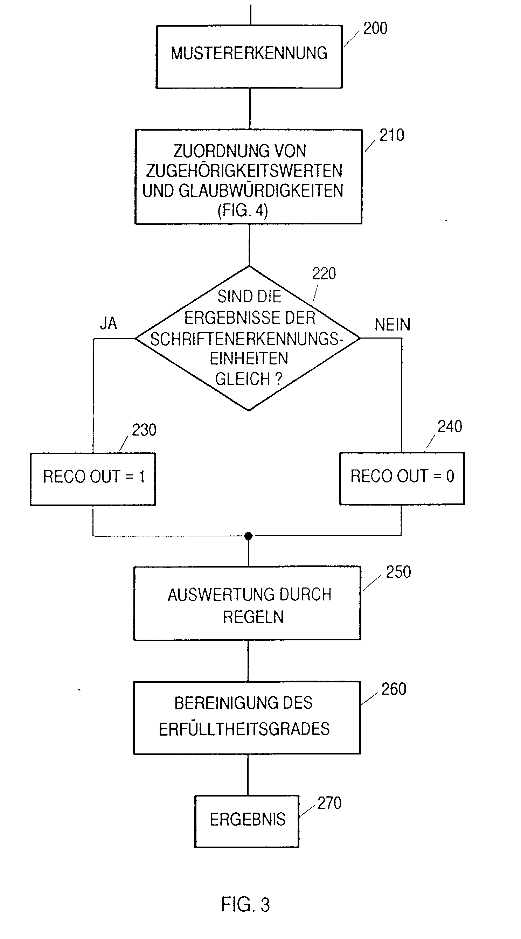

Fig. 3 zeigt ein Flußdiagramm des Schrifterkennungsverfahrens gemäß der Erfindung. Im Schritt 200 wird der Text auf dem Beleg 20 charakterweise erkannt, d. h. die Schrifterkennungseinheiten 30, 40 untersuchen einzeln jedes Charaktermuster auf dem Beleg 20. Für jedes Charaktermuster liefern die Schrifterkennungseinheiten 30, 40 an den Prozessor 50 nicht nur die erkannten Zeichen, sondern auch Zuverlässigkeitswerte für jedes erkannte Zeichen. Die Zeichen und deren Zuverlässigkeitswerte werden in den Charaktermusterspeicherteil 100 ablegt.

Für jedes separate Muster auf dem Beleg erstellen die Schrifterkennungseinheiten 30, 40 mehrere mögliche Alternativzeichen für ein einzelnes Charaktermuster zusammen mit einem entsprechenden Zuverlässigkeitswert. In der bevorzugten Ausführungsform der Erfindung wird nur das Kandidatenzeichen mit dem höchsten Zuverlässigkeitswert genommen und in den Charaktermusterspeicherteil 100 eingespeichert. Es wäre möglich weitere Kandidatenzeichen ebenfalls abzuspeichern und sie gemäß der Erfindung zu verarbeiten.

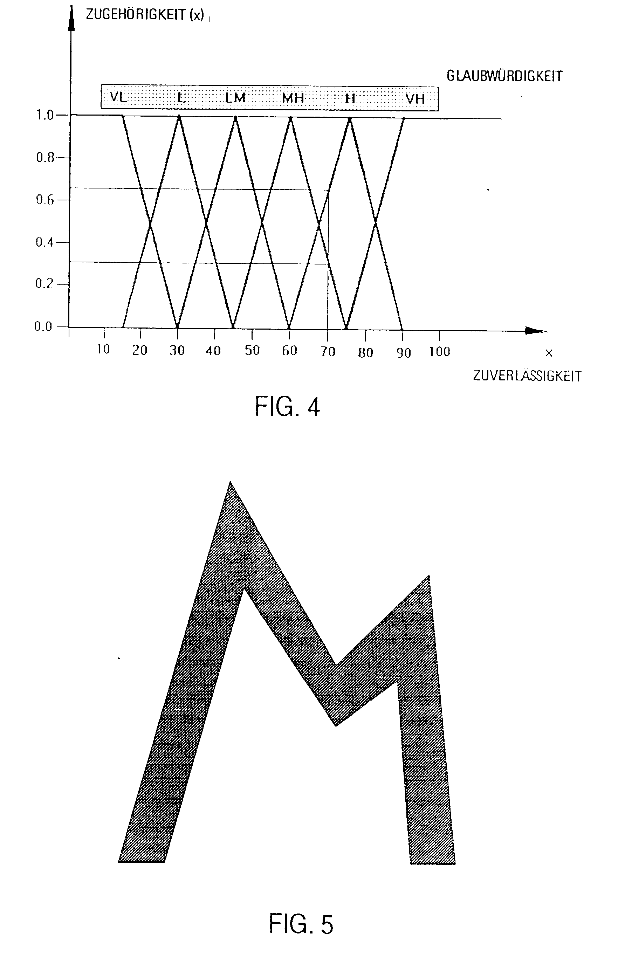

Als Beispiel für den Schritt 200 dient das in Fig. 5 dargestellte Beispiel. Für das menschliche Auge ist dieses Charaktermuster eindeutig der Buchstabe "M". Die Schrifterkennungseinheiten 30, 40 erkennen im Charaktermuster aber mehrere Kandidatenzeichen. An den Prozessor 50 werden dann sämtliche möglichen Varianten des Musters zusammen mit den entsprechenden Zuverlässigkeitswerten geliefert. Da jede Schrifterkennungseinheit 30, 40 nach einem unterschiedlichen Algorithmus funktioniert, werden unterschiedliche Zuverlässigkeitswerte des erkannten Charakters erzeugt.

Eine der Schrifterkennungseinheiten 30, 40 erkennt im Charaktermuster von Fig 2 entweder den Buchstaben "M" (Zuverlässigkeitswert: 80%) oder den Buchstaben "N" (Zuverlässigkeitswert: 50%). Die andere Schrifterkennungseinheit 30, 40 erkennt nicht nur die Buchstaben "M" (Zuverlässigkeitswert: 60%) und "N" (Zuverlässigkeitswert: 50%), sondern auch den Charakter "*" (Zuverlässigkeitswert: 30%). Da die bevorzugte Ausführungsform der Erfindung nur die erkannten Zeichen mit dem höchsten Zuverlässigkeitswert weiter verarbeitet, werden in den Charaktermusterspeicherteil 100 nur die Buchstaben M und die Zuverlässigkeitswerte 60% bzw. 50% eingelesen.

Im Schritt 210 in Fig. 3 werden den Zuverlässigkeitswerten sogenannte Glaubwürdigkeiten (oder "Confidence Levels") und Zugehörigkeiten zugeordnet, wobei alle Zuverlässigkeitswerte innerhalb eines bestimmten Wertebereichs die gleiche Glaubwürdigkeit, aber eine unterschiedliche Zugehörigkeit bekommen. Jeder Zuverlässigkeitswert ist mindestens einer Glaubwürdigkeit zugeordnet. In der bevorzugten Ausführungsform werden sechs Glaubwürdigkeiten definiert. Diese Glaubwürdigkeiten und die zugehörigen Zuverlässigkeitswerte sind in der Tabelle 1 aufgeführt.

**Tabelle 1**

| Bezeichnung | Name | Zuverlässigkeitswertbereich |
|---|---|---|
| VL | Sehr Niedrig | 0-30 |
| L | Niedrig | 15-45 |
| LM | Niedrig/Mittel | 30-60 |
| MH | Mittel/Hoch | 45-75 |
| H | Hoch | 60-90 |
| VH | Sehr Hoch | 75-100 |

Das Verhältnis der Zugehörigkeiten zu den Zuverlässigkeitswerten und den Glaubwürdigkeiten ist in Fig. 4 dargestellt. Aus der Tabelle 1 ist zu entnehmen, daß der Zuverlässigkeitswert 70% den Glaubwürdigkeiten H und MH zugehört, da der Wert 70% in den Bereich der beiden Glaubwürdigkeiten fällt. Fig. 4 gibt die Werte der Zugehörigkeiten für beide Glaubwürdigkeiten an. Für die Glaubwürdigkeit MH hat der Zuverlässigkeitswert 70% einen Zugehörigkeitswert 0.25 und für die Glaubwürdigkeit H hat er einen Zugehörigkeitswert 0.65. Die Zugehörigkeitswerte werden in der Form eines Mustervektors im Mustervektorspeicherteil 120 abgelegt. Für das obengenannte Beispiel eines erkannten Charaktermusters mit dem Zuverlässigkeitswert von 70% hat der Vektor die folgende Form:
(0; 0; 0; 0.25; 0.65; 0 )

Sollte der Zuverlässigkeitswert größer als 90% oder weniger als 10% sein, dann ist die Zugehörigkeit zu einer Glaubwürdigkeit (VH bzw. VL) mit einem Wert 1.0 zugeordnet. Der Mustervektor hätte dann die folgenden Formen:
(0; 0; 0; 0; 0; 1) bzw. (1; 0; 0; 0; 0; 0)

Das Verhältnis zwischen den Glaubwürdigkeiten, den Zugehörigkeiten und den Zuverlässigkeiten ist vom Benutzer des Schrifterkennungssystems festgelegt und kann nach gewonnener Erfahrung geändert werden, um die Ergebnisse des Schrifterkennungsverfahrens zu verbessern. Man kann z.B. Kurven in der Form einer Gauss'schen Verteilung anstelle der in der Fig. 4 dargestellten dreieckigen Kurven für die Ermittlung der Zugehörigkeitswerte verwenden. Ebenfalls ist es möglich, die Größe des Bereichs der Zuverlässigkeitswerte für die Definitionen der Glaubwürdigkeiten zu ändern.

Ein weiterer Eingabewert (Schritt 220), der sogenannte Erkennungsausgabewert oder "RecoOut"-Wert, für den Prozessor 50 ergibt sich aus den Ergebnissen der Schrifterkennungseinheiten 30, 40. Stimmen die Erkennungsergebnisse der zwei Schrifterkennungseinheiten 30, 40 überein, so wird der Erkennungsausgabewert (RecoOut) auf den Wert 1 (Schritt 230) gesetzt. Wenn die Erkennungsergebnisse nicht übereinstimmen, wird der Erkennungsausgabewert (RecoOut) auf den Wert 0 (Schritt 240) gesetzt.

Es ergeben sich somit drei sogenannte "Fuzzy Sets" (unscharfe Mengen), die als Eingabe für das Verfahren gemäß der Erfindung dienen. Die drei Mengen sind:
i) Glaubwürdigkeit der Erkennungseinheit 1 (als Variable "Conf1" bezeichnet)
ii) Glaubwürdigkeit der Erkennungseinheit 2 (als Variable "Conf2" bezeichnet)
iii) Übereinstimmung/Nicht-Übereinstimmung der Erkennungseinheiten (als Variable "RecoOut" bezeichnet)

Das Entscheidungskriterium des erfindungsgemäßen Verfahrens wird mit Regeln ergänzt, die in der Regeldatenbank 110 abgespeichert sind. Diese Regeln werden vom Programmierer des Schrifterkennungsystems 10 erstellt und können nach Erfahrung geändert werden, um die Ergebnisse des Verfahrens zu verbessern.

In der bevorzugten Ausführungsform der Erfindung werden über 60 Regeln in der Regeldatenbank 110 abgespeichert. Tabelle 2 zeigt neun beispielhafte Regeln, um den Aufbau der Regeln zu verdeutlichen.

### Tabelle 2

a) IF Conf1 EQ vl AND Conf2 EQ vh AND
   RecoOut EQ neq THEN vote = reco2
b) IF Conf1 EQ vh AND Conf2 EQ vl AND
   RecoOut EQ neq THEN vote = recol
c) IF Conf1 EQ 1 AND Conf2 EQ vh AND
   RecoOut EQ eq THEN vote = reco2
d) IF Conf1 EQ mh AND Conf2 EQ h AND
   RecoOut EQ eq THEN vote = reco2
e) IF Conf1 EQ vl AND Conf2 EQ h AND
   RecoOut EQ neq THEN vote = reco2
f) IF Conf1 EQ 1 AND Conf2 EQ vl AND
   RecoOut EQ eq THEN vote = reject
g) IF Conf1 EQ 1 AND Conf2 EQ 1 AND
   RecoOut EQ neq THEN vote = reject
h) IF Conf1 EQ 1 AND Conf2 EQ h AND
   RecoOut EQ neq THEN vote = reject
i) IF Conf1 EQ vl AND Conf2 EQ 1 AND
   RecoOut EQ eq THEN vote = reject

Das Ergebnis jeder Regel ist die Variable "vote", die einen von drei Werten, "reco1", "reco2" oder "reject" annehmen kann. Der Wert "reco1" zeigt an, daß die erste Schrifterkennungseinheit 30 nach dem Ergebnis dieser Regel das zuverlässigste erkannte Zeichen angibt. Der Wert "reco2" zeigt an, daß die zweite Schrifterkennungseinheit 40 nach dem Ergebnis dieser Regel das zuverlässigste erkannte Zeichen angibt. Der Wert "reject" zeigt an, daß keine der zwei Schrifterkennungseinheiten 30, 40 nach dem Ergebnis dieser Regel ein zuverlässiges Ergebnis ergibt.

Im Schritt 250 werden die Eingabewerte Conf1, Conf2 und RecoOut mit Hilfe der Regeldatenbank 110 ausgewertet. Die Eingabewerte wurden früher im Mustervektorspeicherteil 120 wie oben dargestellt in der Form eines Mustervektors abgespeichert. Die Bewertung findet im Prozessor 50 statt und die Ergebnisse, d.h. die Variablen "vote", werden in den Regelergebnisspeicherteil 125 eingelesen.

Als Beispiele dieses Auswertungsverfahrens dienen die Regeln a) und i). Regel a) besagt, daß die Variable "vote" den Wert "reco2" annimmt, wenn die Glaubwürdigkeit des Ergebnisses der ersten Schrifterkennungseinheit 30 sehr niedrig (VL) ist (d.h. Zuverlässigkeitswert unter 30% - siehe Fig. 4) und die Glaubwürdigkeit der zweiten Schrifterkennungseinheit 40 sehr hoch (VH) (d.h. Zuverlässigkeitswert größer als 75% - siehe Fig. 4) ist, solange beide Schrifterkennungseinheiten 30, 40 das gleiche Zeichen erkennen (d.h. RecoOut ist 1).

Regel i) besagt, daß die Variable "vote" den Wert "reject" annimmt, wenn die Glaubwürdigkeit des Ergebnisses der ersten Schrifterkennungseinheit 30 sehr niedrig (VL) ist (d.h. Zuverlässigkeitswert unter 30% - siehe Fig. 4) und die Glaubwürdigkeit der zweiten Schrifterkennungseinheit 40 niedrig (L) (d.h. Zuverlässigkeitswert zwischen 15% und 45% - siehe Fig. 4) ist, auch wenn beide Schrifterkennungseinheiten 30, 40 das gleiche Zeichen erkennen (d.h. RecoOut ist 1).

Im Schritt 260 wird der Erfülltheitsgrad jeder Regel mit Hilfe einer sogenannten Inferenz-Methode berechnet. Es sind verschiedene Inferenz-Methoden bekannt, die im Buch "Fuzzy Vote" von H.-H.Boethe, Springer-Verlag, Berlin, 1993, beschrieben sind. In der bevorzugten Ausführungsform wird die sogenannte Max.-Min.-Inferenz-Methode gewählt.

Nach dieser Methode werden die im Schritt 210 berechneten Zugehörigkeitswerte der Eingangsvariablen, Conf1 und Conf2, verwendet, um einen Erfülltheitsgrad (oder Gewicht) der Regel zu berechnen. Der Erfülltheitsgrad der Regel nimmt dann den niedrigen der zwei Zugehörigkeitswerte an. Angenommen, daß die Variable Conf1 einen Zugehörigkeitswert von 0.25 und die Variable Conf2 einen Zugehörigkeitsert von 0.75 hat, ist der Erfülltheitsgrad einer Regel, die von diesen zwei Zugehörigkeitswerten Gebrauch macht, 0.25. In die Erfülltheitsgradtabelle 135 im Speicher 60 werden die Erfülltheitsgrade jeder Regel zusammen mit dem Ergebnis jeder Regel abgespeichert.

Im Schritt 270 wird das Gesamtergebnis des Schrifterkennungsverfahrens berechnet. Die in der Erfülltheitsgradtabelle 135 abgespeicherten Erfülltheitsgradwerte und Regelergebnisse werden durch den Prozessor 50 abgefragt und für jeden der drei möglichen Werte der Regelausgangsvariablen, vote, d.h. die Werte "reject", "reco1" und "reco2", wird der niedrigste Erfülltheitsgrad ausgewählt.

Jedem Wert "reco1", "reco2" und "reject" ist sodann ein Erfülltheitsgrad zugeordnet. Man findet, daß einer dieser Erfülltheitsgrade wesentlich größer als die zwei anderen Erfülltheitsgrade ist. Der Wert mit dem höchsten Erfülltheitsgrad wird als Gesamtergebnis des Schrifterkennungsverfahrens selektiert. Sollte das Gesamtergebnis "reco1" sein, bedeutet dieses, daß die erste Schrifterkennungseinheit 30 das Schriftzeichen am Zuverlässigsten erkannt hat. Sollte das Gesamtergebnis "reco2" sein, bedeutet dieses, daß die zweite Schrifterkennungseinheit 40 das Schriftzeichen am Zuverlässigsten erkannt hat. Sollte das Gesamtergebnis "reject" sein, bedeutet dies, daß keine der Schrifterkennungseinheiten 30, 40 in der Lage ist, ein zuverlässiges Ergebnis für die Schrifterkennung abzuliefern.

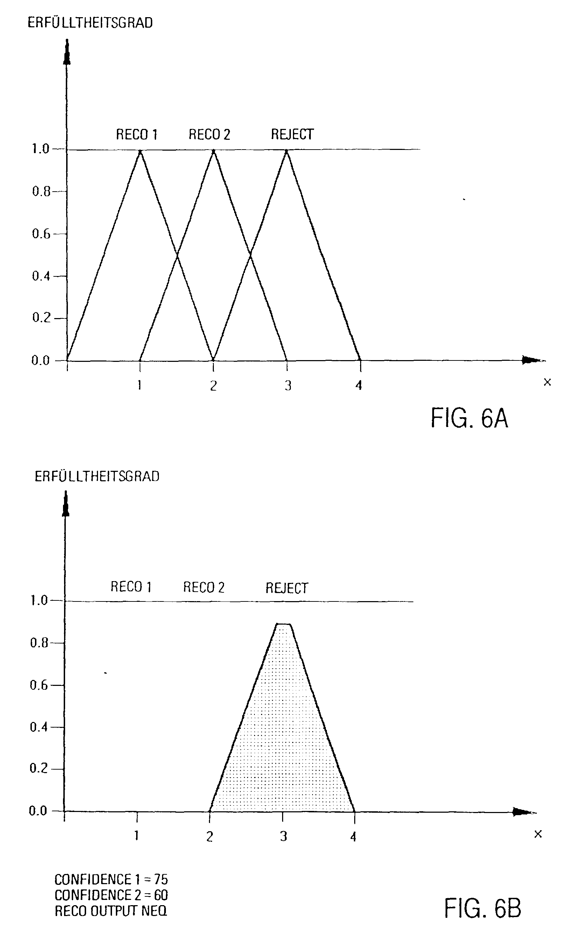

Dieses Gesamtergebnis ist graphisch in Fig. 6A dargestellt. Die Variable "vote" kann drei Werte, "reco1", "reco2" oder "reject" annehmen und jedem dieser drei Werte ist ein Erfülltheitsgrad (Y-Achse) zugeordnet, der einen Wert zwischen 0 und 1.0 haben kann. In Fig. 6B ist das Ergebnis nach Durchlaufen der Regeldatenbank 110 und Berechnung der niedrigsten Erfülltheitsgrade für jeden Wert dargestellt. In diesem Fall haben die Werte "reco1" und "reco2" so niedrige Erfülltheitsgrade, daß sie in der Fig. nicht erscheinen. Der Erfülltheitsgrad des Wertes "reject" ist wesentlich größer und das Gesamtergebnis des neuartigen Schrifterkennungsverfahrens "Fuzzy Vote" ist deswegen "reject", d.h. keines der erkannten Zeichen ist zuverlässig.

Eine Simulation kann die Vorteile des neuartigen Schrifterkennungsverfahrens "Fuzzy Vote" gegenüber den bekannten Verfahren zeigen. Tabelle 3 zeigt die Ergebnisse der Simulation.

**Tabelle 3**

| Spalte | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| Zeile | Reco Out | C1 | C2 | Fuzz Vote | MV | T1 | Reco Out | C1 | C2 | Fuzz Vote | Sub Vote | MV | T1 | Sub T1 |
| 1 | 1 | 15 | 15 | R | R | R | 0 | 15 | 15 | R | | R | R | |
| 2 | 1 | 15 | 30 | R | R | R | 0 | 15 | 30 | R | | R | R | |
| 3 | 1 | 15 | 45 | 2 | R | R | 0 | 15 | 45 | R | | R | R | |
| 4 | 1 | 15 | 60 | 2 | 2 | R | 0 | 15 | 60 | R | | R | R | |
| 5 | 1 | 15 | 75 | 2 | 2 | R | 0 | 15 | 75 | R | .2 | R | R | |
| 6 | 1 | 15 | 90 | 2 | 2 | R | 0 | 15 | 90 | 2 | .17 | R | R | |
| 7 | 1 | 30 | 15 | R | R | R | 0 | 30 | 15 | 2 | | R | R | |
| 8 | 1 | 30 | 30 | 2 | R | R | 0 | 30 | 30 | R | | R | R | |
| 9 | 1 | 30 | 45 | 2 | R | R | 0 | 30 | 45 | R | | R | R | |
| 10 | 1 | 30 | 60 | 2 | 2 | R | 0 | 30 | 60 | R | | R | R | |
| 11 | 1 | 30 | 75 | 2 | 2 | R | 0 | 30 | 75 | R | | R | R | |
| 12 | 1 | 30 | 90 | 2 | 2 | R | 0 | 30 | 90 | R | .33 | R | R | |
| 13 | 1 | 45 | 15 | 1 | R | R | 0 | 45 | 15 | 2 | | R | R | |
| 14 | 1 | 45 | 30 | 1 | R | R | 0 | 45 | 30 | R | | R | R | |
| 15 | 1 | 45 | 45 | 1 | R | R | 0 | 45 | 45 | R | | R | R | |
| 16 | 1 | 45 | 60 | 2 | 2 | R | 0 | 45 | 60 | R | | R | R | |
| 17 | 1 | 45 | 75 | 2 | 2 | R | 0 | 45 | 75 | R | | R | R | |
| 18 | 1 | 45 | 90 | 2 | 2 | R | 0 | 45 | 90 | R | | R | R | |
| 19 | 1 | 60 | 15 | 1 | 1 | 1 | 0 | 60 | 15 | R | | R | 1 | .25 |
| 20 | 1 | 60 | 30 | 1 | 1 | 1 | 0 | 60 | 30 | R | | R | 1 | .50 |
| 21 | 1 | 60 | 45 | 1 | 1 | 1 | 0 | 60 | 45 | R | | R | 1 | .75 |
| 22 | 1 | 60 | 60 | 1 | 1 | 1 | 0 | 60 | 60 | R | | R | 1 | 1 |
| 23 | 1 | 60 | 75 | 2 | 1 | 1 | 0 | 60 | 75 | R | | R | 1 | 1 |
| 24 | 1 | 60 | 90 | 2 | 1 | 1 | 0 | 60 | 90 | R | | R | 1 | 1 |
| 25 | 1 | 75 | 15 | 1 | 1 | 1 | 0 | 75 | 15 | R | .2 | R | 1 | .2 |
| 26 | 1 | 75 | 30 | 1 | 1 | 1 | 0 | 75 | 30 | 1 | | R | 1 | .4 |
| 27 | 1 | 75 | 45 | 1 | 1 | 1 | 0 | 75 | 45 | R | | R | 1 | .6 |
| 28 | 1 | 75 | 60 | 1 | 1 | 1 | 0 | 75 | 60 | R | | R | 1 | .8 |
| 29 | 1 | 75 | 75 | 1 | 1 | 1 | 0 | 75 | 75 | R | | R | 1 | 1 |
| 30 | 1 | 75 | 90 | 2 | 1 | 1 | 0 | 75 | 90 | R | | R | 1 | 1 |
| 31 | 1 | 90 | 15 | 1 | 1 | 1 | 0 | 90 | 15 | R | .17 | R | 1 | .167 |
| 32 | 1 | 90 | 30 | 1 | 1 | 1 | 0 | 90 | 30 | 1 | .33 | R | 1 | .333 |
| 33 | 1 | 90 | 45 | 1 | 1 | 1 | 0 | 90 | 45 | 1 | | R | 1 | .5 |
| 34 | 1 | 90 | 60 | 1 | 1 | 1 | 0 | 90 | 60 | R | | R | 1 | .667 |
| 35 | 1 | 90 | 75 | 1 | 1 | 1 | 0 | 90 | 75 | R | | R | 1 | .833 |
| 36 | 1 | 90 | 90 | 1 | 1 | 1 | 0 | 90 | 90 | R | | R | 1 | 1 |
| | | | | | | | | | | R | | | | |
| | | | | | | | | | | | | | | |
| 48 | Tref fer | | | 33 | 27 | 18 | | | | 6 | 1.4 | 0 | 18 | 12 |

Die Simulation wurde für zwei Fälle vorgenommen. Im ersten Fall wird davon ausgegangen, daß die Ergebnisse der ersten und zweiten Schrifterkennungseinheiten 30, 40 gleich sind, d.h. RecoOut ist 1. Diese Ergebnisse werden in den Spalten 1 bis 6 der Tabelle 3 dargestellt. Im zweiten Fall wird davon ausgegangen, daß die Ergebnisse der ersten und zweiten Schrifterkennungseinheiten 30, 40 ungleich sind, d.h. RecoOut ist O. Diese Ergebnisse werden in den Spalten 7 bis 14 der Tabelle 3 dargestellt.

Jeweils in den Spalten 2 und 8 bzw. 3 und 9 sind die Glaubwürdigkeiten der ersten Schrifterkennungseinheit 30 bzw. der zweiten Schrifterkennungseinheit 40 aufgeführt. Die Ergebnisse des Schrifterkennungsverfahrens "Fuzzy Vote" nach dem hierin beschriebenen Prinzip sind in den Spalten 4 und 10 enthalten. Für ein Schrifterkennungsverfahren, in dem die Ergebnisse der zwei Schrifterkennungseinheiten nach dem vorbekannten Multi-Voting-Verfahren kombiniert werden, sind die Ergebnisse in den Spalten 5 und 12 aufgeführt. Spalten 6 und 13 zeigen den Fall, daß lediglich eine einzelne Schrifterkennungseinheit für das Verfahren verwendet wird. Im letzteren Fall werden alle Ergebnisse mit einer Glaubwürdigkeit unter 50% verworfen. Die Anzahl der Treffer in der Zeile 48 gibt die Anzahl der Fälle an, in denen das Ergebnis der einen oder der anderen Schrifterkennungseinheit 30, 40 als das Gesamtergebnis des Verfahrens verwendet wird.

In den Spalten 11 und 14 werden Substitutionswerte angegeben. Diese Werte zeigen die Wahrscheinlichkeit einer Fehlerkennung eines Schriftzeichens durch die Schrifterkennungsverfahren an. Zeile 5 der Spalte 11 gibt beispielsweise an, daß es eine Chance von 20% gibt, daß die zweite Schrifterkennungseinheit 40 das Schriftzeichen nach Expertenwissen nicht richtig erkennen wird. Zeile 22 der Spalte 14 gibt an, daß die einzelne Schrifterkennungseinheit 30 mit hoher Sicherheit das Schriftzeichen nach Expertenmeinung nicht richtig erkannt hat.

Mit Hilfe der Tabelle 3 kann man den Erfolg der Schrifterkennungsverfahren vergleichen. Das traditionelle Verfahren T, das von einer einzelnen Schrifterkennungseinheit Gebrauch macht, hat eine Trefferrate von Spalten 6 und 13) (18 + 18) / 22 = 50%. Dafür muß aber berücksichtigt werden, daß das traditionelle Verfahren eine wahrscheinlich Substitutionsrate von (Spalte 14) von 12 / 72 = 16.76% hat. Dieses Verfahren hat somit einen Gesamterfolg von (50 - 16.76)% = 33.24%.

Das "Multi-Voting"-Verfahren hat eine Trefferrate von (Spalten 5 und 12) (27 + 0) / 72 = 37%. Diese ist ebenfalls der Gesamterfolg, da eine Substitution in dieser Simulation nicht vorkommt.

Das erfindungsgemäße Verfahren "Fuzzy Vote" hat eine Trefferrate (Spalten 4 und 10) von (33 + 6) / 72 = 39 / 72 = 54.2%. Abzuziehen ist die Substitutionsrate (Spalte 11) von 1.4 / 72 = 1.96%. Es ergibt sich deswegen ein Gesamterfolg von 52.24%. Aus dieser Simulation ist die Verbesserung des Ergebnisses beim Schrifterkennungsverfahren deswegen ersichtlich.

## Patentansprüche

1. Verfahren zur Erkennung von Schriftzeichen auf einem Beleg (20) mit den folgenden Schritten:
a) Erzeugung von jeweils einem erkannten Schriftzeichen und jeweils einer Zuverlässigkeit für das erkannte Schriftzeichen durch mindestens zwei Schrifterkennungseinheiten (30, 40),
b) Erzeugung einer Glaubwürdigkeit für jedes der erkannten Schriftzeichen durch Zuordnung der jeweiligen Zuverlässigkeit zu mehreren Glaubwürdigkeitsbereichen,
c) Feststellung der Übereinstimmung oder Nicht-Übereinstimmung der von den Schrifterkennungseinheiten (30, 40) erkannten Schriftzeichen,
d) Auswertung von Regeln auf der Grundlage der Glaubwürdigkeiten und der Übereinstimmung bzw. Nicht-Übereinstimmung der erkannten Schriftzeichen,
e) und Berechnung eines Gesamtergebnisses mit Hilfe der ausgemerteten Regeln.

2. Verfahren nach Anspruch 1 mit den folgenden Schritten:
Erzeugung eines Erfülltheitsgrades für jede der Regeln,
und Bestimmung derjenigen Regel mit dem höchsten Erfülltheitsgrad.

3. Verfahren nach einem der Ansprüche 1 oder 2,
bei dem den Glaubwürdigkeitsbereichen jeweils eine Zugehörigkeit zugeordnet ist.

4. Verfahren nach Anspruch 3,
bei dem der Erfülltheitsgrad einer Regel die niedrigste der bei der Auswertung der Regel auftretenden Zugehörigkeiten ist.

5. Verfahren nach einem der Ansprüche 1 bis 4,
bei dem jeweils nur dasjenige erkannte Schriftzeichen der Schrifterkennungseinheiten (30, 40) verwendet wird, das die höchste zugehörige Zuverlässigkeit aufweist.

6. Vorrichtung zur Erkennung von Schriftzeichen auf einem Beleg (20),
mit mindestens zwei Schrifterkennungseinheiten (30, 40), die jeweils als Ergebnis ein erkanntes Schriftzeichen und eine Zuverlässigkeit für das erkannte Schriftzeichen erzeugen,
mit einem Prozessor (50) zur Auswertung der Ergebnisse der Schrifterkennungseinheiten (30, 40) und zur Erzeugung eines Gesamtergebnisses,
dadurch gekennzeichnet,
daß der Prozessor (50) Mittel aufweist
zur Erzeugung einer Glaubwürdigkeit für jedes der erkannten Schriftzeichen durch Zuordnung der jeweiligen Zuverlässigkeit zu mehreren Glaubwürdgkeitsbereichen,
zur Feststellung der Übereinstimmung oder Nicht-Übereinstimmung der erkannten Schriftzeichen,
zur Auswertung von Regeln auf der Grundlage der Glaubwürdigkeiten und der Übereinstimmung bzw. Nicht-Übereinstimmung der erkannten Schriftzeichen,
sowie zur Berechnung des Gesamtergebnisses mit Hilfe der ausgewerteten Regeln.

7. Vorrichtung nach Anspruch 6, dadurch gekennzeichnet,
daß der Prozessor (50) zur Berechnung des Gesamtergebnisses Mittel aufweist
zur Erzeugung eines Erfülltheitsgrades für jede der Regeln
und zur Bestimmung derjenigen Regel mit dem höchsten Erfülltheitsgrad.

## Claims

1. Method for the recognition of written characters in a document (20) comprising the following steps:
a) production of one recognised written character at a time and a reliability for each written character recognised by at least two writing recognition units (30, 40),
b) production of a confidence level for each recognised written character by allocating each reliability to several confidence level ranges,
c) establishing the agreement or non-agreement of the written characters recognised by the written character recognition units (30, 40),
d) evaluating rules on the basis of the confidence levels and the agreement or non-agreement of the written characters recognised,
e) and calculating an overall result with the aid of the evaluated rules.

2. Method in accordance with Claim 1 comprising the following steps:
production of a degree of fulfilment for each of the rules,
and determining the rule with the high degree of fulfilment.

3. Method in accordance with one of the Claims 1 or 2, in which an affiliation is allocated to each confidence level range.

4. Method in accordance with Claim 3, in which the degree of fulfilment of a rule is the lowest of the affiliations which appear when the rule is evaluated.

5. Method in accordance with one of the Claims 1 to 4, in which only the written character recognised by the written character recognition units (30, 40) which has the highest allocated reliability is used.

6. Device for recognising written characters on a document (20),
with at least two writing recognition units (30, 40), which produce as a result a recognised written character and a reliability for the written character recognised,
with a processor (50) for evaluating the results of the writing recognition units (30, 40) and for producing an overall result,
characterised in that,
the processor (50) comprises means
for producing a confidence level for each of the written characters recognised by allocating the relevant reliability to several confidence level ranges,
for determining the agreement or non-agreement of the written characters recognised,
for evaluating rules on the basis of the confidence and the agreement or non-agreement of the written characters recognised, and for calculating the overall result with the aid of the rules evaluated.

7. Device in accordance with Claim 6, characterised in that the processor (50) for calculating the overall result comprises means
for producing a degree of fulfilment for each of the rules
and for determining the rule which has the highest degree of fulfilment.

## Revendications

1. Un procédé d'identification de caractères d'écriture sur un document (20) comportant les étapes ci-après :
a) génération chaque fois d'un caractère d'écriture identifié et chaque fois d'une valeur de fiabilité concernant le caractère d'écriture identifié, au moyen d'au moins deux unités d'identification d'écriture (30, 40),
b) génération d'une valeur de crédibilité pour chacun des caractères d'écriture identifiés, par association de la valeur de fiabilité respective à plusieurs plages de valeurs de crédibilité,
c) détermination de la coïncidence ou de la non-coïncidence des caractères d'écriture ayant été identifiés par les unités d'identification d'écriture (30, 40),
d) exploitation de règles basées sur les valeurs de crédibilité et la coïncidence, respectivement la non-coïncidence des caractères d'écriture ayant été identifiés,
e) et calcul d'un résultat global à l'aide des règles exploitées.

2. Procédé selon la revendication 1, présentant les étapes ci-après :
génération d'un degré de satisfaction pour chacune des règles,
et détermination de la règle présentant le degré de satisfaction maximal.

3. Procédé selon l'une des revendications 1 ou 2, pour lequel une appartenance est associée à chacune des plages de crédibilité.

4. Procédé selon la revendication 3, pour lequel le degré de satisfaction d'une règle est la plus faible des appartenances se manifestant lors de l'exploitation de la règle.

5. Procédé selon l'une des revendications 1 à 4, dans lequel chaque fois est utilisé seul le caractère d'écriture, ayant été identifié par les unités d'identification d'écriture (30, 40), qui présente la valeur de fiabilité afférente maximale.

6. Dispositif d'identification de caractères d'écriture sur un document (20),
comportant au moins deux unités d'identification (30, 40), qui génèrent chacune, à titre de résultat, un caractère d'écriture identifié et une valeur de fiabilité du caractère d'écriture identifié,
avec un processeur (50) destiné à l'exploitation des résultats des unités d'identification d'écriture (30, 40) et à la génération d'un résultat global,
caractérisé en ce que
le processeur (50) présente des moyens conçus
pour générer une valeur de crédibilité pour chacun des caractères d'écriture identifiés, par association entre la valeur de fiabilité respective et les différentes plages de crédibilité,
pour déterminer la coïncidence ou la non-coïncidence du caractère d'écriture identifié,
pour exploiter des règles, sur la base des valeurs de crédibilités et de la coïncidence ou de la non-coïncidence des caractères d'écriture identifiés,
ainsi que pour effectuer le calcul du résultat global, à l'aide de règles exploitées.

7. Dispositif selon la revendication 6, caractérisé en ce que le processeur (50) destiné à effectuer le calcul de résultat global présente des moyens,
destinés à générer un degré de satisfaction pour chacune des règles
et à déterminer la règle pour laquelle le degré de satisfaction est maximal.
